(19) **Europäisches Patentamt**
**European Patent Office**
**Office européen des brevets**

(11) **EP 4 184 740 B1**

(12) **EUROPEAN PATENT SPECIFICATION**

(45) Date of publication and mention
of the grant of the patent:
**22.05.2024 Bulletin 2024/21**

(51) International Patent Classification (IPC):
***H02J 3/18*** (2006.01)  ***H02J 3/16*** (2006.01)
***H02J 3/36*** (2006.01)

(21) Application number: **21275164.8**

(52) Cooperative Patent Classification (CPC):
**H02J 3/1842;** H02J 3/16; H02J 3/36; Y02E 60/60

(22) Date of filing: **23.11.2021**

(54) **ELECTRICAL ASSEMBLY FOR REACTIVE POWER COMPENSATION**

SYSTEM ZUR BLINDLEISTUNGSKOMPENSATION

SYSTÈME ÉLECTRIQUE DE COMPENSATION DE L'ÉNERGIE RÉACTIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.05.2023 Bulletin 2023/21**

(73) Proprietor: **General Electric Technology GmbH
5400 Baden (CH)**

(72) Inventors:
• **Kumar, Amit
Stafford (GB)**
• **Barker, Carl
Stafford (GB)**

(74) Representative: **Openshaw & Co.
8 Castle Street
Farnham, Surrey GU9 7HR (GB)**

(56) References cited:
**CN-A- 105 162 139   CN-A- 107 069 766
CN-A- 109 586 311**

• **LI WEI ET AL: "Impact of STATCOM on the voltage
stability of HVDC terminating at location having
low SCR", 2016 IEEE INTERNATIONAL
CONFERENCE ON POWER SYSTEM
TECHNOLOGY (POWERCON), IEEE, 28
September 2016 (2016-09-28), pages 1-6,
XP033001624, DOI:
10.1109/POWERCON.2016.7754064 [retrieved on
2016-11-22]**

**Description**

The invention relates to an electrical assembly and to a method of operating an electrical assembly, preferably for use in high voltage direct current (HVDC) transmission and reactive power compensation.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power is also transmitted directly from offshore wind parks to onshore AC power transmission networks. The conversion between DC power and AC power is utilised where it is necessary to interconnect DC and AC networks. In any such power transmission network, converters (i.e. power converters) are required at each interface between AC and DC power to affect the required conversion from AC to DC or from DC to AC.

Patent application publications CN105162139A, CN107069766A, CN109586311A and the scientific publication "Impact of STATCOM on the voltage stability of HVDC terminating at location having low SCR" by Li Wei et.al (XP033001624) all disclose coordinated control methods of a grid connected power converter and a grid connected reactive power compensation device.

According to a first aspect of the invention, there is provided an electrical assembly comprising at least one power converter and at least one dynamic reactive power source, the or each power converter and the or each dynamic reactive power source connectable to an AC network, the or each power converter and the or each dynamic reactive power source operable to exchange reactive power with the AC network, wherein the or each dynamic reactive power source is configured to selectively adjust its exchange of reactive power with the AC network in response to a characteristic of a reactive current demand of the or each power converter crossing a or a respective reactive current characteristic threshold.

It will be appreciated that the invention works with a single power converter or multiple power converters, works with a single dynamic reactive power source or multiple dynamic reactive power sources, and works with the same reactive current characteristic threshold or different reactive current characteristic thresholds. For example, converters of a bipole scheme may rely on different reactive current characteristic thresholds. When multiple power converters are used, the multiple power converters may be under the control of the same controller or different controllers. When multiple dynamic reactive power sources are used, the multiple dynamic reactive power sources may be under the control of the same controller or different controllers.

The above configuration of the electrical assembly enables coordination of the or each power converter and the or each dynamic reactive power source to exchange reactive power with the AC network in a manner that optimises the converter in terms of equipment performance and losses. Specifically, such coordination is achieved through the dependence of the reactive power exchange by the or each dynamic reactive power source on the reactive current demand of the or each power converter in order for the or each dynamic reactive power source to accurately supplement the reactive power exchange by the or each power converter with the AC network. This frees up the or each power converter to meet additional active power demand, hence optimising the rating of the or each power converter and improving performance in terms of, for example, reduced losses and increased bandwidth for dynamic response.

The characteristic of the reactive current demand of the or each power converter crossing the or the respective reactive current characteristic threshold may include a magnitude of the reactive current demand of the or each power converter crossing a or a respective reactive current magnitude threshold.

The characteristic of the reactive current demand of the or each power converter crossing the or the respective reactive current characteristic threshold may include a rate of change of the reactive current demand of the or each power converter crossing a or a respective reactive current rate of change threshold.

In a preferred embodiment, the or each dynamic reactive power source is configured to selectively adjust its exchange of reactive power with the AC network to maintain the or each power converter within a pre-defined operating range of reactive current in response to the characteristic of the reactive current demand of the or each power converter crossing the or the respective reactive current characteristic threshold. This enables further optimisation of the or each power converter to operate in a desired operating range of reactive power exchange with the AC network.

The adjustment of the exchange of reactive power with the AC network may be carried out in the capacitive or inductive direction. In embodiments of the invention, the or each dynamic reactive power source may be configured to selectively adjust its exchange of reactive power with the AC network in the capacitive direction in response to the characteristic of the reactive current demand of the or each power converter crossing the or the respective reactive current characteristic threshold in the capacitive direction. In further embodiments of the invention, the or each dynamic reactive power source may be configured to selectively adjust its exchange of reactive power with the AC network in the inductive direction in response to the characteristic of the reactive current demand of the or each power converter crossing the or the respective reactive current characteristic threshold in the inductive direction. In still further embodiments of the invention, the or each dynamic reactive power source may be configured to selectively adjust its exchange of reactive power with the AC network in a first direction in response to the characteristic of the reactive current demand of the or each power converter crossing the or the respective reactive current characteristic threshold in the first direction, the or each dynamic reactive power source may be configured to selectively adjust its exchange of reactive power with the AC network in a second direction in response to the characteristic of the reactive current demand of the or each power converter crossing the or the respective reactive current characteristic threshold in the second direction subsequent to the characteristic of the reactive current demand of the or each power converter crossing the or the respective reactive current characteristic threshold in the first direction, and the first direction may be opposite to the second direction. This enables the or each dynamic reactive power source to adjust the exchange of reactive power with the AC network in the correct direction responsive to the characteristic of the reactive current demand of the or each power converter crossing the or the respective reactive current characteristic threshold.

Optionally the or the respective reactive current characteristic threshold may be a fixed reactive current characteristic threshold. Alternatively the or the respective reactive current characteristic threshold may be a variable reactive current characteristic threshold. Further alternatively the electrical assembly may comprise a plurality of power converters, at least one of the reactive current characteristic thresholds may be a fixed reactive current characteristic threshold, and the or each other of the reactive current characteristic thresholds may be a variable reactive current characteristic threshold.

In embodiments of the invention, the or the respective variable reactive current characteristic threshold may be a function of at least one electrical parameter and/or at least one operating state of the or each power converter.

A magnitude of the adjustment of the exchange of reactive power with the AC network by the or each dynamic reactive power source may be a fixed magnitude.

In further embodiments of the invention, a magnitude of the adjustment of the exchange of reactive power with the AC network by the or each dynamic reactive power source may be a function of at least one electrical parameter and/or at least one operating state of the or each power converter.

In the invention, the or each electrical parameter may include, but is not limited to, active power, measured DC current and measured AC voltage. The or each operating state may include, but is not limited to, availability of redundancy.

It can be economical and/or more efficient to have the or each power converter provide both the active and reactive power demanded by the AC network at a certain electrical parameter and/or a certain operating state of the or each power converter. However, as the electrical parameter and/or operating state of the or each power converter changes, it may become more desirable to rely on the or each dynamic reactive power source to contribute some of the demanded reactive power and thereby increase the active power capacity of the or each power converter. As a result, the electrical assembly of the invention can be further optimised by having the magnitude of the adjustment of the exchange of reactive power with the AC network by the or each dynamic reactive power source be a function of at least one electrical parameter and/or at least one operating state of the or each power converter.

In still further embodiments of the invention, a magnitude of the adjustment of the exchange of reactive power with the AC network by the or each dynamic reactive power source may be a function of a rate of change of the reactive current demand of the or each power converter. In such embodiments, a magnitude of the adjustment of the exchange of reactive power with the AC network by the or each dynamic reactive power source may be a function of a rate of change of the reactive current demand of the or each power converter at, or at substantially, the or the respective reactive current characteristic threshold. For example, the magnitude of the adjustment of the exchange of reactive power with the AC network by the or each dynamic reactive power source may be a function of the rate of change of the reactive current demand of the or each power converter at a reactive current characteristic value that is in the range of 95% to 105% of the or the respective reactive current characteristic threshold.

A sufficiently high rate of change of the reactive current demand may indicate that the magnitude of the reactive current demand of the or each power converter might reach the reactive current magnitude threshold. However, there may be a delay in the or each dynamic reactive power source in responding to the crossing of the reactive current magnitude threshold, which in turn may cause a non-linear response. This can be addressed by having a magnitude of the adjustment of the exchange of reactive power with the AC network by the or each dynamic reactive power source be set as a function of a rate of change of the reactive current demand of the or each power converter.

The type and configuration of the or each dynamic reactive power source may vary as long as the or each dynamic reactive power source is capable of exchanging reactive power with the AC network and capable of selectively adjusting the exchanged reactive power. For example, the or each dynamic reactive power source may include, but is not limited to, a static synchronous compensator (STATCOM) or a static VAr compensator (SVC).

According to a second aspect of the invention, there is provided a method of operating an electrical assembly, the electrical assembly comprising at least one power converter and at least one dynamic reactive power source, the or each power converter and the or each dynamic reactive power source connectable to an AC network, the or each power converter and the or each dynamic reactive power source operable to exchange reactive power with the AC network, wherein the method includes the step of operating the or each dynamic reactive power source to adjust its exchange of reactive power with the AC network in response to a characteristic of a reactive current demand of the or each power converter crossing a or a respective reactive current characteristic threshold.

The features and advantages of the electrical assembly of the first aspect of the invention and its embodiments apply mutatis mutandis to the features and advantages of the method of the second aspect of the invention and its embodiments.

The method of the invention may include the step of operating the or each dynamic reactive power source to adjust its exchange of reactive power with the AC network to maintain the or each power converter within a pre-defined operating range of reactive current in response to the characteristic of the reactive current demand of the or each power converter crossing the or the respective reactive current characteristic threshold.

In the method of the invention, the characteristic of the reactive current demand of the or each power converter crossing the or the respective reactive current characteristic threshold may include a magnitude of the reactive current demand of the or each power converter crossing a or a respective reactive current magnitude threshold.

In the method of the invention, the characteristic of the reactive current demand of the or each power converter crossing the or the respective reactive current characteristic threshold may include a rate of change of the reactive current demand of the or each power converter crossing a or a respective reactive current rate of change threshold.

The method of the invention may include the step of operating the or each dynamic reactive power source to adjust its exchange of reactive power with the AC network in the capacitive direction in response to the characteristic of the reactive current demand of the or each power converter crossing the or the respective reactive current characteristic threshold in the capacitive direction. The method of the invention may include the step of operating the or each dynamic reactive power source to adjust its exchange of reactive power with the AC network in the inductive direction in response to the characteristic of the reactive current demand of the or each power converter crossing the or the respective reactive current characteristic threshold in the inductive direction. The method of the invention may include the steps of operating the or each dynamic reactive power source to adjust its exchange of reactive power with the AC network in a first direction in response to the characteristic of the reactive current demand of the or each power converter crossing the or the respective reactive current characteristic threshold in the first direction, and operating the or each dynamic reactive power source to adjust its exchange of reactive power with the AC network in a second direction in response to the characteristic of the reactive current demand of the or each power converter crossing the or the respective reactive current characteristic threshold in the second direction, wherein the first direction is opposite to the second direction. The first direction may be a capacitive or inductive direction.

In the method of the invention, the or the respective reactive current characteristic threshold may be a fixed reactive current characteristic threshold. In the method of the invention, the or the respective reactive current characteristic threshold may be a variable reactive current characteristic threshold. In the method of the invention, the electrical assembly may comprise a plurality of power converters, at least one of the reactive current characteristic thresholds may be a fixed reactive current characteristic threshold, and the or each other of the reactive current characteristic thresholds may be a variable reactive current characteristic threshold.

In the method of the invention, the or the respective variable reactive current characteristic threshold may be a function of at least one electrical parameter and/or at least one operating state of the or each power converter.

In the method of the invention, a magnitude of the adjustment of the exchange of reactive power with the AC network by the or each dynamic reactive power source may be a function of at least one electrical parameter and/or at least one operating state of the or each power converter.

In the method of the invention, a magnitude of the adjustment of the exchange of reactive power with the AC network by the or each dynamic reactive power source may be a function of a rate of change of the reactive current demand of the or each power converter. In the method of the invention, a magnitude of the adjustment of the exchange of reactive power with the AC network by the or each dynamic reactive power source may be a function of a rate of change of the reactive current demand of the or each power converter at, or at substantially, the or the respective reactive current characteristic threshold.

In the method of the invention, the or each dynamic reactive power source may include, but is not limited to, a STATCOM or SVC.

It will be appreciated that the use of the terms "first" and "second", and the like, in this patent specification is merely intended to help distinguish between similar features, and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

Preferred embodiments of the invention will now be described, by way of non-limiting examples, with reference to the accompanying drawings in which:

Figure 1 shows a voltage source converter of an electrical assembly according to an embodiment of the invention;
Figure 2 shows a schematic view of an exemplary half-bridge chain-link module;
Figure 3 shows a schematic view of an exemplary full-bridge chain-link module;
Figure 4 shows an electrical assembly according to an embodiment of the invention;
Figure 5 shows an electrical assembly according to another embodiment of the invention;
Figure 6 shows a representative circuit of a voltage source converter connected to a point of connection via an inductive circuit;
Figure 7 illustrates a PQ characteristic of a voltage source converter of an electrical assembly according to an embodiment of the invention; and
Figure 8 shows a flow chart that illustrates an example operation of an electrical assembly according to an embodiment of the invention.

The figures are not necessarily to scale, and certain features and certain views of the figures may be shown exaggerated in scale or in schematic form in the interests of clarity and conciseness.

Both power converters and dynamic reactive power sources provide reactive power under two control modes; reactive power control and AC voltage control. Reactive power control exchanges a defined reactive power with an AC network, while AC voltage control automatically varies the reactive power exchange with the AC network to support the AC voltage at a point of connection (PoC) to achieve a target value.

When operating parallel dynamic reactive power sources, each parallel dynamic reactive power source can be operated in reactive power control mode or AC voltage control mode so that the parallel dynamic power sources are operated in AC voltage control mode only, reactive power control mode only or a combination of AC voltage control mode and reactive power control mode. Commonly, when AC voltage control mode is desired, one device is operated in AC voltage control mode whilst the other is operated in reactive power control mode to avoid adverse interaction. Alternatively, both parallel devices can operate in AC voltage control mode with a reactive power/AC voltage droop characteristic applied to both devices for them to share the control function. However, these modes of operation do not lend themselves to optimising the overall solution in terms of equipment performance and losses.

The following embodiments of the invention are used primarily in AC-DC voltage source conversion in HVDC applications, but it will be appreciated that the following embodiments of the invention are applicable mutatis mutandis to other types of voltage source converters and other applications operating at different voltage levels.

An electrical assembly according to an embodiment of the invention comprises a power converter and a dynamic reactive power source.

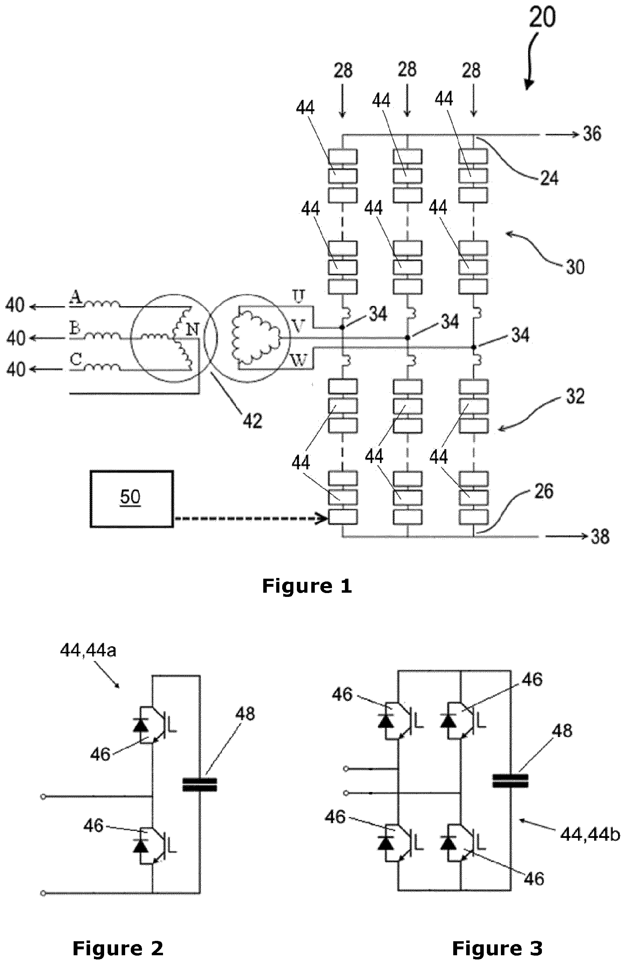

In the embodiment shown the power converter is a voltage source converter, which is shown in Figure 1 and is designated generally by the reference numeral 20. The voltage source converter 20 includes first and second DC terminals 24,26 and a plurality of converter limbs 28. Each converter limb 28 extends between the first and second DC terminals 24,26 and includes first and second limb portions 30,32 separated by a respective AC terminal 34. In each converter limb 28, the first limb portion 30 extends between the first DC terminal 24 and the AC terminal 34, while the second limb portion 32 extends between the second DC terminal 26 and the AC terminal 34. In use, the first and second DC terminals 24,26 of the voltage source converter 20 are respectively connected to a DC network 36,38. In use, the AC terminal 34 of each converter limb 28 of the voltage source converter 20 is connected to a respective AC phase of a three-phase AC network 40 via a star-delta transformer arrangement 42. It is envisaged that in other embodiments of the invention the transformer arrangement 42 may be a starstar transformer arrangement, may be another type of transformer arrangement or may be omitted altogether. The three-phase AC network 40 is an AC power grid 40.

Each limb portion 30,32 includes a switching valve, which includes a chain-link converter that is defined by a plurality of series-connected modules 44. Each module 44 may vary in topology, examples of which are described as follows. Figure 2 shows schematically the structure of an exemplary module 44 in the form of a half-bridge module 44a. The half-bridge module 44a includes a pair of switching elements 46 and a capacitor 48. Each switching element 46 of the half-bridge module 44a is in the form of an IGBT which is connected in parallel with an anti-parallel diode. The pair of switching elements 46 are connected in parallel with the capacitor 48 in a half-bridge arrangement to define a 2-quadrant unipolar module 44a that can provide zero or positive voltage and can conduct current in both directions. Figure 3 shows schematically the structure of an exemplary module 44 in the form of a full-bridge module 44b. The full-bridge module 44b includes two pairs of switching elements 46 and a capacitor 48. Each switching element 46 of the full-bridge module 44b is in the form of an IGBT which is connected in parallel with an anti-parallel diode. The pairs of switching elements 46 are connected in parallel with the capacitor 48 in a full-bridge arrangement to define a 4-quadrant bipolar module 44b that can provide negative, zero or positive voltage and can conduct current in both directions.

The structure of a given module 44 includes the arrangement and type of switching elements 46 and energy storage device 48 used in the given module 44. It will be appreciated that it is not essential for all of the modules 44 to have the same module structure. For example, the plurality of modules 44 may comprise a combination of half-bridge modules 44a and full-bridge modules 44b.

It is envisaged that, in other embodiments of the invention, each switching element 46 of each module 44 may be replaced by a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated semiconductor device. It is also envisaged that, in other embodiments of the invention, each diode may be replaced by a plurality of series-connected diodes.

The capacitor 48 of each module 44 is selectively bypassed or inserted into the corresponding chain-link converter by changing the states of the switching elements 46. This selectively directs current through the capacitor 48 or causes current to bypass the capacitor 48, so that the module 44 provides a zero or non-zero voltage. The capacitor 48 of the module 44 is bypassed when the switching elements 46 in the module 44 are configured to form a short circuit in the module 44, whereby the short circuit bypasses the capacitor 48. This causes current in the corresponding chain-link converter to pass through the short circuit and bypass the capacitor 48, and so the module 44 provides a zero voltage, i.e. the module 44 is configured in a bypassed mode. The capacitor 48 of the module 44 is inserted into the corresponding chain-link converter when the switching elements 46 in the module 44 are configured to allow the current in the corresponding chain-link converter to flow into and out of the capacitor 48. The capacitor 48 then charges or discharges its stored energy so as to provide a non-zero voltage, i.e. the module 44 is configured in a non-bypassed mode.

In this manner the switching elements 46 in each module 44 are switchable to control flow of current through the corresponding capacitor 48.

It is possible to build up a combined voltage across each chain-link converter, which is higher than the voltage available from each of its individual modules 44, via the insertion of the capacitors of multiple modules 44, each providing its own voltage, into each chain-link converter. In this manner switching of the switching elements 46 in each module 44 causes each chain-link converter to provide a stepped variable voltage source, which permits the generation of a voltage waveform across each chain-link converter using a step-wise approximation. Hence, the switching elements 46 in each limb portion 30,32 are switchable to selectively permit and inhibit flow of current through the corresponding capacitor 48 in order to control a voltage across the corresponding limb portion 30,32.

It is envisaged that, in other embodiments of the invention, each module 44 may be replaced by another type of module which includes at least one switching element and at least one energy storage device, the or each switching element and the or each energy storage device in each such module arranged to be combinable to selectively provide a voltage source.

It is also envisaged that, in other embodiments of the invention, the capacitor 48 in each module 44 may be replaced by another type of energy storage device which is capable of storing and releasing energy to provide a voltage, e.g. a battery or a fuel cell.

It is further envisaged that, in still other embodiments of the invention, each module 44 may be replaced by at least one switching element.

The voltage source converter 20 further includes a converter controller 50 programmed to control the switching of the switching elements 46. For the purposes of simplicity, the converter controller 50 is exemplarily described with reference to its implementation as a single control unit. In other embodiments, the converter controller 50 may be implemented as a plurality of control units. The configuration of the converter controller 50 may vary depending on specific requirements of the voltage source converter 20. For example, the converter controller 50 may include a plurality of control units, each of which is programmed to control the switching of the switching elements 46 of a respective one of the modules 44. Each control unit may be configured to be internal to, or external of, the corresponding module 44. Alternatively, the converter controller 50 may include a combination of one or more control units internal to the corresponding module 44 and one or more control units external of the corresponding module 44. Each control unit may be configured to communicate with at least one other control unit via telecommunications links.

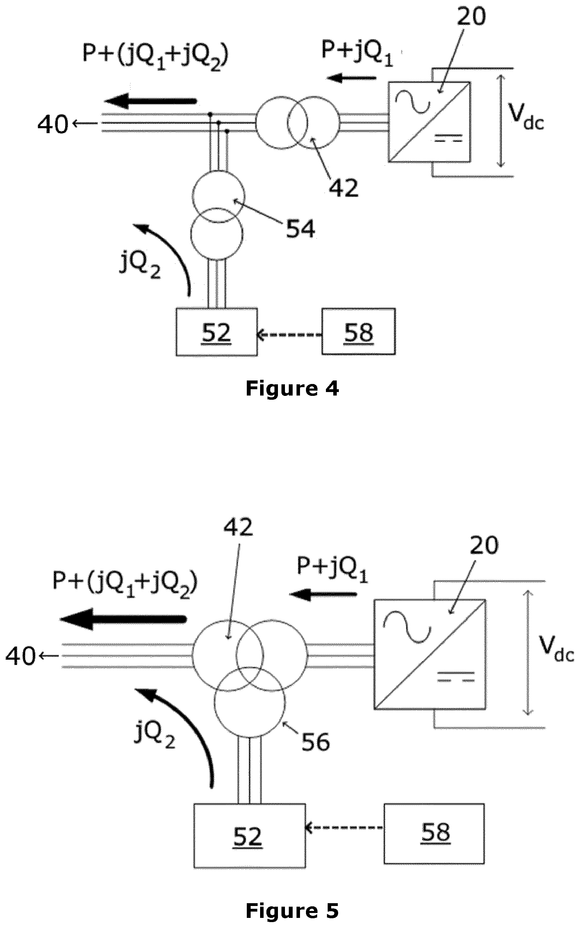

The dynamic reactive power source includes a STATCOM 52. In other embodiments, the STATCOM 52 may be replaced by a different dynamic reactive power source, such as an SVC. As shown in Figure 4, the STATCOM 52 is connected in shunt, via a transformer 54, with power transmission lines interconnecting the AC network 40 and the star-delta transformer arrangement 42. In an alternative embodiment shown in Figure 5, the transformer arrangement 42 may further include a tertiary winding 56, and the STATCOM 52 may be connected to the tertiary winding 56.

The STATCOM 52 includes a dynamic reactive power source controller 58 programmed to control the STATCOM 52 to exchange reactive power with the AC network 40 and dynamically adjust a magnitude of its exchange of reactive power with the AC network 40. The dynamic reactive power source controller 58 is configured to communicate with the converter controller 50, e.g. via one or more telecommunications links. It will be appreciated that other controller configurations of the electrical assembly can be used. For example, the converter controller 50 and the dynamic reactive power source controller 58 may be controlled by a common controller (such as a global controller), or the converter controller 50 and the dynamic reactive power source controller 58 may be the same controller or part of the same higher-level controller.

Operation of the electrical assembly is described as follows.

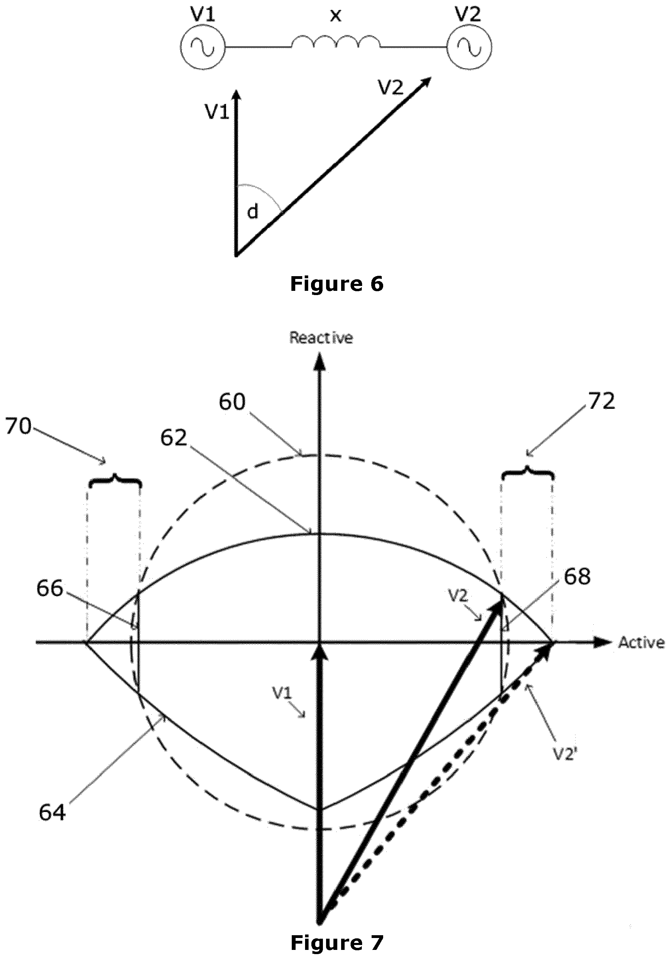

The voltage source converter 20 can exchange both active power P and reactive power $Q_1$ with the AC network 40. By using the STATCOM 52 to provide additive reactive power support at a PoC with the AC network 40, the demand for reactive power supplied by the voltage source converter 20 can be reduced in order to increase the capacity of the voltage source converter 20 to transmit real power. This is illustrated by the representative circuit shown in Figure 6, which represents the voltage source converter (V2) connected to a PoC (V1) via an inductive circuit (x). From Figure 6, the active-reactive (PQ) characteristic of the voltage source converter 20 can be derived as shown in Figure 7. In Figure 7, the dashed line 60 represents the MVA rating of the voltage source converter 20, the solid line 62 is a limit line that ensures that the peak AC voltage is always below the DC voltage and represents the maximum capacitive range of the voltage source converter 20, the solid line 64 is a limit line that represents the maximum inductive range of the voltage source converter 20, the vertical solid lines 66,68 represent the nominal active power limits at a defined reactive power, the intervals 70,72 represent an increase in active power above the nominal value that can be achieved by reducing the reactive power loading of the voltage source converter 20, V1 represents the magnitude of the AC voltage at the PoC, V2 represents the AC voltage of the voltage source converter 20, and V2' represents an AC voltage of the voltage source converter corresponding to a higher active power that can be achieved by reducing the reactive power loading of the voltage source converter 20. It will be understood that V2' has the same length (and therefore magnitude) as V2 but at a different angle with respect to V1 so that it extends further along the X-axis which represents active power.

A current of the voltage source converter 20 has both a direct current component $I_d$ that is in phase with the AC voltage and a quadrature current component $I_q$ that is 90° phase-shifted from $I_d$. $I_d$ is therefore a component of real power P whilst $I_q$ is a component of reactive power Q, as shown by Equations 1 and 2.

$$P = V_d I_d \qquad (1)$$

$$Q = -V_d I_q \qquad (2)$$

The maximum current capability limit $I_{max}$ of the voltage source converter 20 depends on the converter configuration and the power electronic components used in its construction. To prevent current overload of the voltage source converter 20, the predetermined maximum current injection $I_{max}$ into the AC network 40 can be determined by Equation 3, where $V1^{rms}$ is the grid side voltage, $P_{max}$ is the maximum active power injection and $Q_{max}$ is the maximum reactive power injection.

$$I_{max} = \frac{\sqrt{P_{max}^2 + Q_{max}^2}}{\sqrt{3}\,V1^{rms}} \qquad (3)$$

To maintain voltage levels and aid voltage recovery following a voltage disturbance, it may be favourable to operate the voltage source converter 20 with ancillary voltage support. For example, voltage support can be achieved using a voltage-reactive power droop scheme. The supplementary voltage support signal $\Delta V$ from the voltage-reactive power droop is added to a reactive power reference signal of the voltage source converter 20. For the voltage source converter 20 to prioritise reactive power, the q-axis current reference limit $I_q^{lim}$ is given maximum priority and the d-axis current reference limit $I_d^{lim}$ becomes a function of the q-axis reactive current demand $I_q^{ref}$, as given by Equations 4 and 5.

$$I_q^{lim} = I_{max} \qquad (4)$$

$$I_d^{lim} = \sqrt{(I_{max})^2 - \left(I_q^{ref}\right)^2} \qquad (5)$$

The reactive power exchange between the STATCOM 52 and the AC network 40 is coordinated with the operation of the voltage source converter 20. In particular, the voltage source converter 20 is used as a master AC voltage controlling device while the STATCOM 52 is used to dynamically adjust a magnitude of its exchange of reactive power with the AC network 40 as required to maintain the voltage source converter 20, preferably within a defined operating range of reactive current.

The magnitude and sign of the reactive current demand $I_q^{ref}$ is compared to a reactive current magnitude threshold in each of the capacitive and inductive directions. Initially it is determined whether $I_q^{ref}$ is capacitive or inductive.

If $I_q^{ref}$ exceeds the reactive current magnitude threshold in the capacitive direction, then the dynamic reactive power source controller 58 controls the STATCOM 52 to increase its exchange of reactive power with the AC network 40 by a defined amount in the capacitive direction. If $I_q^{ref}$ exceeds the reactive current magnitude threshold in the inductive direction, then the dynamic reactive power source controller 58 controls the STATCOM 52 to decrease its exchange of reactive power with the AC network 40 by a defined amount in the inductive direction.

When $I_q^{ref}$ crosses the reactive current magnitude threshold in the opposite direction (i.e. the magnitude of $I_q^{ref}$ is decreasing), then the dynamic reactive power source controller 58 controls the STATCOM 52 to change its exchange of reactive power with the AC network 40 by a defined amount in the opposite direction from the previous change in the exchange of reactive power. Hysteresis may be applied to the reactive current magnitude threshold so that the value of $I_q^{ref}$ at which the change in exchange of reactive power occurs is not the same in both directions. This is to provide stable operation and to avoid toggling of reactive power adjustments in the STATCOM 52.

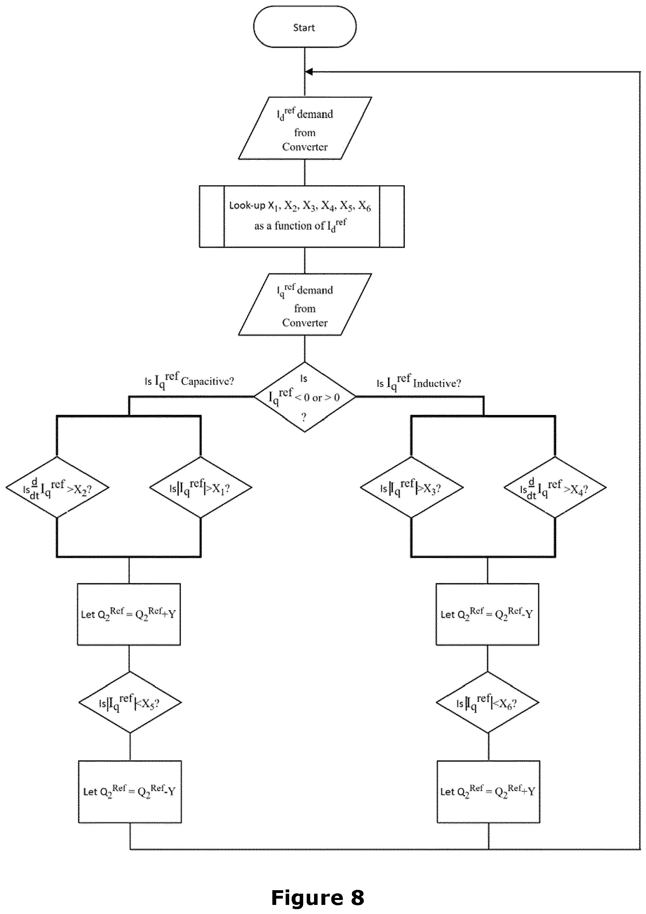

Figure 8 shows a flow chart that illustrates an example operation of an electrical assembly according to an embodiment of the invention.

Initially the active current demand $I_d^{ref}$ of the voltage source converter 20 is obtained. This permits reactive current characteristic threshold values X1,X2,X3,X4,X5,X6 to be obtained from, for example, a look-up table in which each reactive current characteristic threshold value X1,X2,X3,X4,X5,X6 is a function of the magnitude of $I_d^{ref}$. Then the reactive current demand $I_q^{ref}$ of the voltage source converter 20 is obtained. The sign of $I_q^{ref}$ is checked to confirm whether $I_q^{ref}$ is capacitive or inductive.

If $I_q^{ref}$ is capacitive, then a magnitude of $I_q^{ref}$ is compared against a reactive current magnitude threshold X1 and a rate of change of $I_q^{ref}$ is compared against a reactive current rate of change threshold X2. If either the magnitude of $I_q^{ref}$ exceeds X1 or the rate of change of $I_q^{ref}$ exceeds X2, then a reactive power demand $Q_2^{Ref}$ of the STATCOM 52 is modified to increase the reactive power $jQ_2$ supplied by the STATCOM 52 by an amount of Y. The magnitude of $I_q^{ref}$ is then compared against a reactive current magnitude threshold X5 to check whether the magnitude of $I_q^{ref}$ is decreasing. If the magnitude of $I_q^{ref}$ drops below X5, then the reactive power demand $Q_2^{Ref}$ of the STATCOM 52 is modified to decrease the reactive power $jQ_2$ supplied by the STATCOM 52 by an amount of Y.

If $I_q^{ref}$ is inductive, then a magnitude of $I_q^{ref}$ is compared against a reactive current magnitude threshold X3 and a rate of change of $I_q^{ref}$ is compared against a reactive current rate of change threshold X4. If either the magnitude of $I_q^{ref}$ exceeds X3 or the rate of change of $I_q^{ref}$ exceeds X4, then a reactive power demand $Q_2^{Ref}$ of the STATCOM 52 is modified to decrease the reactive power $jQ_2$ supplied by the STATCOM 52 by an amount of Y. The magnitude of $I_q^{ref}$ is then compared against a reactive current magnitude threshold X6 to check whether the magnitude of $I_q^{ref}$ is decreasing. If the magnitude of $I_q^{ref}$ drops below X6, then the reactive power demand $Q_2^{Ref}$ of the STATCOM 52 is modified to increase the reactive power $jQ_2$ supplied by the STATCOM 52 by an amount of Y.

In this example operation, the maximum positive value of $Q_2^{Ref}$ corresponds to the maximum capacitive output of the STATCOM 52 while the maximum negative value of $Q_2^{Ref}$ corresponds to the maximum inductive output of the STATCOM 52.

The process can be set to loop indefinitely while the electrical assembly is online.

The value of Y can be a fixed value or can vary, for example, as a function of an electrical parameter and/or an operating state of the voltage source converter 20.

The reactive current characteristic threshold may be a fixed or variable reactive current characteristic threshold. The variable reactive current characteristic threshold may be a function of a measurable electrical parameter of the voltage source converter 20. For example, the variable reactive current characteristic threshold may be a function of an active power of the voltage source converter 20, which may be as determined by either an operator (e.g. through instruction) or through network parameters (e.g. such as DC voltage and DC current as measured or demanded) and AC network voltage as measured.

Optionally a magnitude of the adjustment of the exchange of reactive power between the STATCOM 52 and the AC network 40 may be a function of an active power of the or each power converter.

Further optionally a magnitude of the adjustment of the exchange of reactive power between the STATCOM 52 and the AC network 40 may be a function of a rate of change of the reactive current demand of the or each power converter at, or at substantially, the or the respective reactive current characteristic threshold. This is in order for the STATCOM 52 to provide additional reactive power in anticipation of a fast dynamic disturbance in the AC network 40.

The coordination between the voltage source converter 20 and the STATCOM 52 is facilitated by communication between the converter controller 50 and the dynamic reactive power controller 58 either directly or via another controller, such as a global controller. The comparison of the magnitude and sign of the reactive current demand $I_q^{ref}$ may be carried out by the converter controller 50 or the dynamic reactive power controller 58 or a different controller.

It will be further appreciated that the topologies of the assemblies in the figures are merely chosen to help illustrate the working of the invention and may be replaced by other suitable assembly topologies.

The listing or discussion of an apparently prior-published document or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. An electrical assembly comprising at least one power converter (20) and at least one dynamic reactive power source (52), the or each power converter (20) and the or each dynamic reactive power source (52) connectable to an AC network (40), the or each power converter (20) and the or each dynamic reactive power source (52) operable to exchange reactive power with the AC network (40), wherein the or each dynamic reactive power source (52) is configured to selectively adjust its exchange of reactive power with the AC network (40) in response to a characteristic of a reactive current demand ($I_q^{ref}$) of the or each power converter (20) crossing a or a respective reactive current characteristic threshold.

2. An electrical assembly according to Claim 1 wherein the characteristic of the reactive current demand ($I_q^{ref}$) of the or each power converter (20) crossing the or the respective reactive current characteristic threshold includes a magnitude of the reactive current demand ($I_q^{ref}$) of the or each power converter (20) crossing a or a respective reactive current magnitude threshold.

3. An electrical assembly according to Claim 1 or Claim 2 wherein the characteristic of the reactive current demand ($I_q^{ref}$) of the or each power converter (20) crossing the or the respective reactive current characteristic threshold includes a rate of change of the reactive current demand ($I_q^{ref}$) of the or each power converter (20) crossing a or a respective reactive current rate of change threshold.

4. An electrical assembly according to any one of the preceding claims wherein the or each dynamic reactive power source (52) is configured to selectively adjust its exchange of reactive power with the AC network (40) to maintain the or each power converter (20) within a pre-defined operating range of reactive current in response to the characteristic of the reactive current demand ($I_q^{ref}$) of the or each power converter (20) crossing the or the respective reactive current characteristic threshold.

5. An electrical assembly according to any one of the preceding claims wherein the or each dynamic reactive power source (52) is configured to selectively adjust its exchange of reactive power with the AC network (40) in the capacitive direction in response to the characteristic of the reactive current demand ($I_q^{ref}$) of the or each power converter (20) crossing the or the respective reactive current characteristic threshold in the capacitive direction.

6. An electrical assembly according to any one of the preceding claims wherein the or each dynamic reactive power source (52) is configured to selectively adjust its exchange of reactive power with the AC network (40) in the inductive direction in response to the characteristic of the reactive current demand ($I_q^{ref}$) of the or each power converter (20) crossing the or the respective reactive current characteristic threshold in the inductive direction.

7. An electrical assembly according to any one of the preceding claims wherein the or each dynamic reactive power source (52) is configured to selectively adjust its exchange of reactive power with the AC network (40) in a first direction in response to the characteristic of the reactive current demand ($I_q^{ref}$) of the or each power converter (20) crossing the or the respective reactive current characteristic threshold in the first direction, the or each dynamic reactive power source (52) is configured to selectively adjust its exchange of reactive power with the AC network (40) in a second direction in response to the characteristic of the reactive current demand ($I_q^{ref}$) of the or each power converter (20) crossing the or the respective reactive current characteristic threshold in the second direction subsequent to the characteristic of the reactive current demand ($I_q^{ref}$) of the or each power converter (20) crossing the or the respective reactive current characteristic threshold in the first direction, and the first direction is opposite to the second direction.

8. An electrical assembly according to any one of the preceding claims wherein the or the respective reactive current characteristic threshold is a fixed reactive current characteristic threshold.

9. An electrical assembly according to any one of Claims 1 to 8 wherein the or the respective reactive current characteristic threshold is a variable reactive current characteristic threshold.

10. An electrical assembly according to any one of Claims 1 to 8 wherein the electrical assembly comprises a plurality of power converters (20), at least one of the reactive current characteristic thresholds is a fixed reactive current characteristic threshold, and the or each other of the reactive current characteristic thresholds is a variable reactive current characteristic threshold.

11. An electrical assembly according to Claim 9 or Claim 10 wherein the or the respective variable reactive current characteristic threshold is a function of at least one electrical parameter and/or at least one operating state of the or each power converter (20).

12. An electrical assembly according to any one of the preceding claims wherein a magnitude of the adjustment of the exchange of reactive power with the AC network (40) by the or each dynamic reactive power source (52) is a function of at least one electrical parameter and/or at least one operating state of the or each power converter (20).

13. An electrical assembly according to any one of the preceding claims wherein a magnitude of the adjustment of the exchange of reactive power with the AC network (40) by the or each dynamic reactive power source (52) is a function of a rate of change of the reactive current demand ($I_q^{ref}$) of the or each power converter (20).

14. An electrical assembly according to any one of the preceding claims wherein a magnitude of the adjustment of the exchange of reactive power with the AC network (40) by the or each dynamic reactive power source (52) is a function of a rate of change of the reactive current demand ($I_q^{ref}$) of the or each power converter (20) at, or at substantially, the or the respective reactive current characteristic threshold.

15. A method of operating an electrical assembly, the electrical assembly comprising at least one power converter (20) and at least one dynamic reactive power source (52), the or each power converter (20) and the or each dynamic reactive power source (52) connectable to an AC network (40), the or each power converter (20) and the or each dynamic reactive power source (52) operable to exchange reactive power with the AC network (40), wherein the method includes the step of operating the or each dynamic reactive power source (52) to adjust its exchange of reactive power with the AC network (40) in response to a characteristic of a reactive current demand ($I_q^{ref}$) of the or each power converter (20) crossing a or a respective reactive current characteristic threshold.


**Patentansprüche**

1. Elektrische Anordnung, die mindestens einen Leistungswandler (20) und mindestens eine dynamische Blindleistungsquelle (52) umfasst, wobei der oder jeder Leistungswandler (20) und die oder jede dynamische Blindleistungsquelle (52) an ein Wechselstromnetz (40) anschließbar sind, wobei der oder jeder Leistungswandler (20) und die oder jede dynamische Blindleistungsquelle (52) betreibbar sind, um Blindleistung mit dem Wechselstromnetz (40) auszutauschen, wobei die oder jede dynamische Blindleistungsquelle (52) konfiguriert ist, ihren Blindleistungsaustausch mit dem Wechselstromnetz (40) als Reaktion darauf selektiv anzupassen, dass eine Charakteristik eines Blindstrombedarfs ($I_q^{ref}$) des oder jedes Leistungswandlers (20) einen oder einen jeweiligen Blindstromcharakteristik-Schwellenwert überschreitet.

2. Elektrische Anordnung nach Anspruch 1, wobei die Charakteristik des Blindstrombedarfs ($I_q^{ref}$) des oder jedes Leistungswandlers (20), die den oder den jeweiligen Blindstromcharakteristik-Schwellenwert überschreitet, eine Größe des Blindstrombedarfs ($I_q^{ref}$) des oder jedes Leistungswandlers (20) beinhaltet, die einen oder einen jeweiligen Blindstromgrößen-Schwellenwert überschreitet.

3. Elektrische Anordnung nach Anspruch 1 oder Anspruch 2, wobei die Charakteristik des Blindstrombedarfs ($I_q^{ref}$) des oder jedes Leistungswandlers (20), die den oder den jeweiligen Blindstromcharakteristik-Schwellenwert überschreitet, eine Änderungsrate des Blindstrombedarfs ($I_q^{ref}$) des oder jedes Leistungswandlers (20) beinhaltet, die einen oder einen jeweiligen Bildstromänderungsraten-Schwellenwert überschreitet.

4. Elektrische Anordnung nach einem der vorstehenden Ansprüche, wobei die oder jede dynamische Blindleistungsquelle (52) konfiguriert ist, ihren Austausch von Blindleistung mit dem Wechselstromnetz (40) selektiv anzupassen, um den oder jeden Leistungswandler (20) innerhalb eines vordefinierten Betriebsbereichs eines Blindstroms als Reaktion darauf aufrechtzuerhalten, dass die Charakteristik des Blindstrombedarfs ($I_q^{ref}$) des oder jedes Leistungswandlers (20) den oder den jeweiligen Blindstromcharakteristik-Schwellenwert überschreitet.

5. Elektrische Anordnung nach einem der vorstehenden Ansprüche, wobei die oder jede dynamische Blindleistungsquelle (52) konfiguriert ist, ihren Austausch von Blindleistung mit dem Wechselstromnetz (40) in der kapazitiven Richtung als Reaktion darauf selektiv anzupassen, dass die Charakteristik des Blindstrombedarfs ($I_q^{ref}$) des oder jedes Leistungswandlers (20) den oder den jeweiligen Blindstromcharakteristik-Schwellenwert in der kapazitiven Richtung überschreitet.

6. Elektrische Anordnung nach einem der vorstehenden Ansprüche, wobei die oder jede dynamische Blindleistungsquelle (52) konfiguriert ist, ihren Austausch von Blindleistung mit dem Wechselstromnetz (40) in der induktiven Richtung als Reaktion darauf selektiv anzupassen, dass die Charakteristik des Blindstrombedarfs ($I_q^{ref}$) des oder jedes Leistungswandlers (20) den oder den jeweiligen Blindstromcharakteristik-Schwellenwert in der induktiven Richtung überschreitet.

7. Elektrische Anordnung nach einem der vorstehenden Ansprüche, wobei die oder jede dynamische Blindleistungsquelle (52) konfiguriert ist, ihren Austausch von Blindleistung mit dem Wechselstromnetz (40) in einer ersten Richtung als Reaktion darauf selektiv anzupassen, dass die Charakteristik des Blindstrombedarfs ($I_q^{ref}$) des oder jedes Leistungswandlers (20) den oder den jeweiligen Blindstromcharakteristik-Schwellenwert in der ersten Richtung überschreitet, die oder jede dynamische Blindleistungsquelle (52) konfiguriert ist, ihren Austausch von Blindleistung mit dem Wechselstromnetz (40) in einer zweiten Richtung als Reaktion darauf selektiv anzupassen, dass die Charakteristik des Blindstrombedarfs ($I_q^{ref}$) des oder jedes Leistungswandlers (20) den oder den jeweiligen Blindstromcharakteristik-Schwellenwert in der zweiten Richtung anschließend daran überschreitet, dass die Charakteristik des Blindstrombedarfs ($I_q^{ref}$) des oder jedes Leistungswandlers (20) den oder den jeweiligen Blindstromcharakteristik-Schwellenwert in der ersten Richtung überschreitet, und die erste Richtung der zweiten Richtung entgegengesetzt ist.

8. Elektrische Anordnung nach einem der vorstehenden Ansprüche, wobei der oder der jeweilige Blindstromcharakteristik-Schwellenwert ein fester Blindstromcharakteristik-Schwellenwert ist.

9. Elektrische Anordnung nach einem der Ansprüche 1 bis 8, wobei der oder der jeweilige Blindstromcharakteristik-Schwellenwert ein variabler Blindstromcharakteristik-Schwellenwert ist.

10. Elektrische Anordnung nach einem der Ansprüche 1 bis 8, wobei die elektrische Anordnung eine Vielzahl von Leistungswandlern (20) umfasst, mindestens einer der Blindstromcharakteristik-Schwellenwerte ein fester Blindstromcharakteristik-Schwellenwert ist und der oder jeder andere der Blindstromcharakteristik-Schwellenwerte ein variabler Blindstromcharakteristik-Schwellenwert ist.

11. Elektrische Anordnung nach Anspruch 9 oder Anspruch 10, wobei der oder der jeweilige variable Blindstromcharakteristik-Schwellenwert von mindestens einem elektrischen Parameter und/oder mindestens einem Betriebszustand des oder jedes Leistungswandlers (20) abhängig ist.

12. Elektrische Anordnung nach einem der vorstehenden Ansprüche, wobei eine Größe der Anpassung des Austauschs von Blindleistung mit dem Wechselstromnetz (40) durch die oder jede dynamische Blindleistungsquelle (52) von mindestens einem elektrischen Parameter und/oder mindestens einem Betriebszustand des oder jedes Leistungswandlers (20) abhängig ist.

13. Elektrische Anordnung nach einem der vorstehenden Ansprüche, wobei eine Größe der Anpassung des Austauschs von Blindleistung mit dem Wechselstromnetz (40) durch die oder jede dynamische Blindleistungsquelle (52) von einer Änderungsrate des Blindstrombedarfs ($I_q^{ref}$) des oder jedes Leistungswandlers (20) abhängig ist.

14. Elektrische Anordnung nach einem der vorstehenden Ansprüche, wobei eine Größe der Anpassung des Austauschs von Blindleistung mit dem Wechselstromnetz (40) durch die oder jede dynamische Blindleistungsquelle (52) von einer Änderungsrate des Blindstrombedarfs ($I_q^{ref}$) des oder jedes Leistungswandlers (20) bei, oder im Wesentlichen bei, dem oder dem jeweiligen Blindstromcharakteristik-Schwellenwert abhängig ist.

15. Verfahren zum Betreiben einer elektrischen Anordnung, wobei die elektrische Anordnung mindestens einen Leistungswandler (20) und mindestens eine dynamische Blindleistungsquelle (52) umfasst, wobei der oder jeder Leistungswandler (20) und die oder jede dynamische Blindleistungsquelle (52) an ein Wechselstromnetz (40) anschließbar sind, wobei der oder jeder Leistungswandler (20) und die oder jede dynamische Blindleistungsquelle (52) betreibbar sind, um Blindleistung mit dem Wechselstromnetz (40) auszutauschen, wobei das Verfahren den Schritt des Betreibens der oder jeder dynamischen Blindleistungsquelle (52) beinhaltet, um ihren Blindleistungsaustausch mit dem Wechselstromnetz (40) als Reaktion darauf anzupassen, dass eine Charakteristik eines Blindstrombedarfs ($I_q^{ref}$) des oder jedes Leistungswandlers (20) einen oder einen jeweiligen Blindstromcharakteristik-Schwellenwert überschreitet.

**Revendications**

1. Ensemble électrique comprenant au moins un convertisseur de puissance (20) et au moins une source de puissance réactive dynamique (52), le ou chaque convertisseur de puissance (20) et la ou chaque source de puissance réactive dynamique (52) pouvant être raccordés à un réseau CA (40), le ou chaque convertisseur de puissance (20) et la ou chaque source de puissance réactive dynamique (52) pouvant fonctionner pour échanger de la puissance réactive avec le réseau CA (40), dans lequel la ou chaque source de puissance réactive dynamique (52) est configurée pour ajuster de manière sélective son échange de puissance réactive avec le réseau CA (40) en réponse à une caractéristique d'une demande de courant réactif ($I_q^{ref}$) du ou de chaque convertisseur de puissance (20) franchissant un ou un seuil de caractéristique de courant réactif respectif.

2. Ensemble électrique selon la revendication 1, dans lequel la caractéristique de la demande de courant réactif ($I_q^{ref}$) du ou de chaque convertisseur de puissance (20) franchissant le ou le seuil de caractéristique de courant réactif respectif inclut une grandeur de la demande de courant réactif ($I_q^{ref}$) du ou de chaque convertisseur de puissance (20) franchissant un ou un seuil d'amplitude de courant réactif respectif.

3. Ensemble électrique selon la revendication 1 ou la revendication 2, dans lequel la caractéristique de la demande de courant réactif ($I_q^{ref}$) du ou de chaque convertisseur de puissance (20) franchissant le ou le seuil de caractéristique de courant réactif respectif inclut un taux de variation de la demande de courant réactif ($I_q^{ref}$) du ou de chaque convertisseur de puissance (20) franchissant un ou un seuil de taux de variation de courant réactif respectif.

4. Ensemble électrique selon l'une quelconque des revendications précédentes, dans lequel la ou chaque source de puissance réactive dynamique (52) est configurée pour ajuster de manière sélective son échange de puissance réactive avec le réseau CA (40) pour maintenir le ou chaque convertisseur de puissance (20) dans une plage de fonctionnement prédéfinie de courant réactif en réponse à la caractéristique de la demande de courant réactif ($I_q^{ref}$) du ou de chaque convertisseur de puissance (20) franchissant le ou le seuil de caractéristique de courant réactif respectif.

5. Ensemble électrique selon l'une quelconque des revendications précédentes, dans lequel la ou chaque source de puissance réactive dynamique (52) est configurée pour ajuster de manière sélective son échange de puissance réactive avec le réseau CA (40) dans le sens capacitif en réponse à la caractéristique de la demande de courant réactif ($I_q^{ref}$) du ou de chaque convertisseur de puissance (20) franchissant le ou le seuil de caractéristique de courant réactif respectif dans le sens capacitif.

6. Ensemble électrique selon l'une quelconque des revendications précédentes, dans lequel la ou chaque source de puissance réactive dynamique (52) est configurée pour ajuster de manière sélective son échange de puissance réactive avec le réseau CA (40) dans le sens inductif en réponse à la caractéristique de la demande de courant réactif ($I_q^{ref}$) du ou de chaque convertisseur de puissance (20) franchissant le ou le seuil de caractéristique de courant réactif respectif dans le sens inductif.

7. Ensemble électrique selon l'une quelconque des revendications précédentes, dans lequel la ou chaque source de puissance réactive dynamique (52) est configurée pour ajuster de manière sélective son échange de puissance réactive avec le réseau CA (40) dans un premier sens en réponse à la caractéristique de la demande de courant réactif ($I_q^{ref}$) du ou de chaque convertisseur de puissance (20) franchissant le ou le seuil de caractéristique de courant réactif respectif dans le premier sens, la ou chaque source de puissance réactive dynamique (52) est configurée pour ajuster de manière sélective son échange de puissance réactive avec le réseau CA (40) dans un second sens en réponse à la caractéristique de la demande de courant réactif ($I_q^{ref}$) du ou de chaque convertisseur de puissance (20) franchissant le ou le seuil de caractéristique de courant réactif respectif dans le second sens à la suite de la caractéristique de la demande de courant réactif ($I_q^{ref}$) du ou de chaque convertisseur de puissance (20) franchissant le ou le seuil de caractéristique de courant réactif respectif dans le premier sens, et le premier sens est opposé au second sens.

8. Ensemble électrique selon l'une quelconque des revendications précédentes, dans lequel le ou le seuil de caractéristique de courant réactif respectif est un seuil de caractéristique de courant réactif fixe.

9. Ensemble électrique selon l'une quelconque des revendications 1 à 8, dans lequel le ou le seuil de caractéristique de courant réactif respectif est un seuil de caractéristique de courant réactif variable.

10. Ensemble électrique selon l'une quelconque des revendications 1 à 8, dans lequel l'ensemble électrique comprend une pluralité de convertisseurs de puissance (20), au moins l'un des seuils de caractéristique de courant réactif est un seuil de caractéristique de courant réactif fixe et le ou chaque autre des seuils de caractéristique de courant réactif est un seuil de caractéristique de courant réactif variable.

11. Ensemble électrique selon la revendication 9 ou la revendication 10, dans lequel le ou le seuil de caractéristique de courant réactif variable respectif est fonction d'au moins un paramètre électrique et/ou d'au moins un état de fonctionnement du ou de chaque convertisseur de puissance (20).

12. Ensemble électrique selon l'une quelconque des revendications précédentes, dans lequel une grandeur de l'ajustement de l'échange de puissance réactive avec le réseau CA (40) par la ou chaque source de puissance réactive dynamique (52) est fonction d'au moins un paramètre électrique et/ou d'au moins un état de fonctionnement du ou de chaque convertisseur de puissance (20).

13. Ensemble électrique selon l'une quelconque des revendications précédentes, dans lequel une grandeur de l'ajustement de l'échange de puissance réactive avec le réseau CA (40) par la ou chaque source de puissance réactive dynamique (52) est fonction d'un taux de modification de la demande de courant réactif ($I_q^{ref}$) du ou de chaque convertisseur de puissance (20).

14. Ensemble électrique selon l'une quelconque des revendications précédentes, dans lequel une grandeur de l'ajustement de l'échange de puissance réactive avec le réseau CA (40) par la ou chaque source de puissance réactive dynamique (52) est fonction d'un taux de modification de la demande de courant réactif ($I_q^{ref}$) du ou de chaque convertisseur de puissance (20) au niveau, ou sensiblement au niveau, du ou du seuil de caractéristique de courant réactif respectif.

15. Procédé de fonctionnement d'un ensemble électrique, l'ensemble électrique comprenant au moins un convertisseur de puissance (20) et au moins une source de puissance réactive dynamique (52), le ou chaque convertisseur de puissance (20) et la ou chaque source de puissance réactive dynamique (52) pouvant être raccordés à un réseau CA (40), le ou chaque convertisseur de puissance (20) et la ou chaque source de puissance réactive dynamique (52) pouvant fonctionner pour échanger de la puissance réactive avec le réseau CA (40), dans lequel le procédé inclut l'étape de fonctionnement de la ou chaque source de puissance réactive dynamique (52) pour ajuster son échange de puissance réactive avec le réseau CA (40) en réponse à une caractéristique d'une demande de courant réactif ($I_q^{ref}$) du ou de chaque convertisseur de puissance (20) franchissant un ou un seuil de caractéristique de courant réactif respectif.

**Figure 1**

**Figure 2**

**Figure 3**

P+(jQ$_1$+jQ$_2$)

P+jQ$_1$

20

V$_{dc}$

40

42

54

jQ$_2$

52

58

**Figure 4**

42

20

P+(jQ$_1$+jQ$_2$)

P+jQ$_1$

V$_{dc}$

40

jQ$_2$

56

52

58

**Figure 5**

**Figure 6**

**Figure 7**

**Figure 8**

**REFERENCES CITED IN THE DESCRIPTION**

**Patent documents cited in the description**

- CN 105162139 A
- CN 107069766 A
- CN 109586311 A